# EUROPÄISCHE PATENTANMELDUNG

(11) **EP 1 081 973 A1**
(43) Veröffentlichungstag der Anmeldung: **07.03.2001**
(21) Anmeldenummer: 00119095.8
(22) Anmeldetag: 03.09.2000
(51) Int. Cl.: H04Q 7/36

(54) **Verfahren und Vorrichtung zur Vermessung eines Funkweges**

(30) Priorität: 02.09.1999 DE 19941880
(71) Anmelder: WAVETEK GMBH, 85737 Ismaning (DE)
(72) Erfinder: Klenner, Günther, 83022 Rosenheim (DE); Herzmann, Bernd, 81539 München (DE)
(74) Vertreter: Neumeister, Kurt Gustav

(57) **Zusammenfassung**

Bei einem Verfahren zur Vermessung eines Funkweges mit wenigstens zwei Meßeinrichtungen, welche jeweils über Sende- und Empfangsmittel zum Senden und Empfangen von Signalen aufweisen, ergibt sich eine einfache und kostengünstige Realisierung von Ausbreitungsmessungen, insbesondere zur Ermittlung einer optimalen Position einer Feststation eines zellularen Funknetzes dadurch, daß über den zu vermessenden Funkweg aus dem Empfang der Signale erhaltene Meßergebnisse übertragen werden.

## Beschreibung

Die vorliegende Erfindung betrifft ein Verfahren zur Vermessung eines Funkweges gemäß dem Oberbegriff des Patentanspruchs 1. Ferner betrifft die Erfindung eine Verwendung gemäß Patentanspruch 9 und eine Vorrichtung gemäß Patentanspruch 10.

Im Stand der Technik ist es bekannt, z. B. zur Bestimmung einer optimalen Position einer Basisstation für ein zellulares Funknetz, sogenannte Ausbreitungsmessungen (engl. "coverage measurements") durchzuführen. Dabei fährt ein mit Mobilfunkgerät ausgerüstetes Fahrzeug eine Gegend ab, in welchem an unterschiedlichen Stellen ein portabler Dauerstrichsender aufgestellt wird. Der Dauerstrichsender ist dabei an einer Position aufgestellt, an welcher möglicherweise eine Basisstation installiert werden soll. Durch Vergleiche der Meßergebnisse bei unterschiedlichen Ortskoordinaten des Senders kann eine optimale Position ermittelt werden. Dabei können allerdings lediglich Feldstärkemessungen für den Downlink durchgeführt werden. Die Auswertungsmöglichkeiten derartiger Messungen sind deshalb naturgemäß beschränkt. Alternativ wäre es auch möglich, sozusagen probeweise, eine Basisstation aufzubauen und diese auf die Qualität der Funkstrecken zu vermessen, was aber verständlicherweise aus Kostengründen nicht durchführbar ist.

Die Aufgabe der vorliegenden Erfindung besteht daher darin, die Nachteile des Standes der Technik zu vermeiden und insbesondere ein Verfahren und eine Vorrichtung der eingangs genannten Art derart weiterzubilden, daß auf einfache und kostengünstige Art und Weise Ausbreitungsmessungen hoher Aussagekraft durchgeführt werden können.

Die erfindungsgemäße Aufgabe wird bei einem Verfahren der eingangs genannten Art dadurch gelöst, daß über den zu vermessenden Funkweg Meßergebnisse und/oder Steuerbefehle übertragen werden. Die Meßergebnisse stammen insbesondere aus dem Empfang der Signale.

Bevorzugt sind die beiden Test- oder Meßeinrichtungen tragbar bzw. mobil. Vorzugsweise ist die erste Meßeinrichtung zur Simulation einer Basisstation eines zellularen Funknetzes vorgesehen, und die zweite Meßeinrichtung ist ein Mobiltelefon. Auf diese Weise läßt sich das "air interface" einfach und kostengünstig testen.

Vorteilhafterweise ist die erste Meßeinrichtung eine Testeinrichtung für Mobiltelefone. Eine derartige an sich bekannte Meßeinrichtung wird also erfindungsgemäß zur Simulation einer Basisstation an einer festen Position aufgestellt, wobei die Position in einer darauffolgenden Meßreihe natürlich auch verändert werden kann. Die Testeinrichtung kann dann aufgrund der Übertragung der Meßergebnisse diese mitprotokollieren.

Vorzugsweise werden die Meßergebnisse der ersten Meßeinrichtung über den Funkweg zur zweiten Meßeinrichtung übertragen. Auf diese Weise kann das Meßmobiltelefon, welches ein Gebiet um die Position der simulierten Basisstation, das im wesentlichen deren Reichweite entspricht, abfährt, insbesondere Meßergebnisse hinsichtlich der Qualität der Messungen empfangen.

Ebenfalls werden die Meßergebnisse der zweite Meßeinrichtung über den Funkweg zur ersten Meßeinrichtung übertragen. Dort können diese empfangen und ausgewertet werden, und zwar insbesondere im Hinblick darauf, ob Einstellungen an der simulierten Basisstation vorgenommen werden sollen.

Bevorzugt wird zwischen den Meßeinrichtungen eine Datenverbindung über den zu vermessenden Funkweg aufgebaut. Insbesondere im Gegensatz zu einer Sprachverbindung ergibt sich hierdurch die Möglichkeit die Meßergebnisse zwischen den Meßeinrichtungen zu kommunizieren.

Vorteilhafterweise werden über die Datenverbindung Daten, insbesondere Steuerbefehle, zwischen den Meßeinrichtungen ausgetauscht werden. Dabei weisen die Steuerbefehle Parameter der simulierten Basisstation, wie z. B. bezüglich des Ausgangspegels und/oder des Frequenzversatzes auf. Alternativ oder zusätzlich weisen die Steuerbefehle Parameter der Funkverbindung, wie z. B. bezüglich der Kanalzuweisung, des Zeitschlitzes und/oder der Hopping-Betriebsart, auf. Somit kann die simulierte Basisstation bzw. die Funkverbindung verändert werden, wobei die sich durch die Veränderungen ergebenden Auswirkungen im Feld festgestellt werden können. Auch ist so eine Optimierung der simulierten Basisstation bzw. der Funkverbindung möglich.

Zur Verbesserung der Sende- bzw. Empfangseigenschaften sind an die erste Meßeinrichtung mit Hilfseinrichtungen für das Senden und/oder Empfangen angeschlossen. Die Hilfseinrichtungen können z. B. einen Rotor, eine Verstärkereinrichtung und/oder eine Schalteinheit aufweisen. Dies ermöglicht ebenfalls eine realistischere Simulation der Feststation.

In einer bevorzugten Variante der Erfindung weisen die Steuerbefehle Parameter der Hilfseinrichtungen auf. Somit kann die simulierte Basisstation auch im Hinblick auf deren Hilfseinrichtungen verändert (angesteuert) oder abgefragt werden, wobei die sich durch die Veränderungen ergebenden Auswirkungen im Feld festgestellt werden können. Auch ist so eine Optimierung der Einstellungen der Hilfseinrichtungen möglich.

Vorzugsweise werden über den Funkweg von der simulierten Basisstation zu dem Mobiltelefon die Ortskoordinaten der Basistation bzw. des Meßgeräts übertragen. Dabei sind die Ortskoordinaten vorzugsweise GPS-Differenzdaten. D. h. durch entsprechende GPS-Messung erhaltene Daten der beiden Meßeinrichtungen werden kombiniert, um die Genauigkeit der Messungen zu erhöhen.

In einer passiven Überwachungs- oder Monitoringbetriebsart werden über den zu vermessenden Funkweg statistische Daten des Funkverkehrs ermittelt. Dabei ist ein Kerngedanke der Erfindung, daß ein Basisstationsimulator die Vermessung von Funkbereichen zu statistischen Zwecken durchführt. Dies kann Offline oder Online, d, h. während einer Funkverbindung erfolgen. Diese statistischen Werte können dann über die Funkdatenverbindung übermittelt werden. Die so gewonnenen Daten können insbesondere bei der Wahl der Position einer Basisstation, der Auslegung eines Funknetzes, der Wahl der Zellteilungen eines zellularen Netzes..., verwendet werden.

Weitere bevorzugte Ausführungsformen der Erfindung sind in den abhängigen Patentansprüchen offenbart.

Die Erfindung, sowie weitere Ziele, Merkmale, Vorteile und Anwendungsmöglichkeiten derselben, wird bzw. werden nachfolgend anhand der beigefügten Zeichnungen näher erläutert. Dabei bilden alle beschriebenen und/oder bildlich dargestellten Elemente den Gegenstand der vorliegenden Erfindung, und zwar unabhängig von ihrer Zusammenfassung in den Patentansprüchen oder deren Rückbeziehung. Überall in den Zeichnungen bezeichnen dieselben Bezugszeichen dieselben bzw. entsprechende Elemente. In den Zeichnungen zeigen:
- Fig. 1: eine stark schematische Darstellung zur Veranschaulichung des erfindungsgemäßen Verfahrens;
- Fig. 2: eine stark schematische Darstellung zur Veranschaulichung einer Variante der vorliegenden Erfindung;
- Fig. 3: eine stark schematische Darstellung zur Veranschaulichung einer weiteren Variante der vorliegenden Erfindung; und
- Fig. 4: eine stark schematische Darstellung des Meßverfahrens gemäß der vorliegenden Erfindung;
- Fig. 5a: eine schematische Darstellung der Kommunikation zwischen einem Mobiltelefon und einer Basisstation gemäß dem bekannten Betrieb eines Funk- bzw. Telekommunikationsnetzes; und
- Fig. 5b: eine schematische Darstellung der Kommunikation zwischen einem Mobiltelefon und einem Basisstationssimulator gemäß der vorliegenden Erfindung während des Verfahrens des Durchführens von Ausbreitungsmessungen.

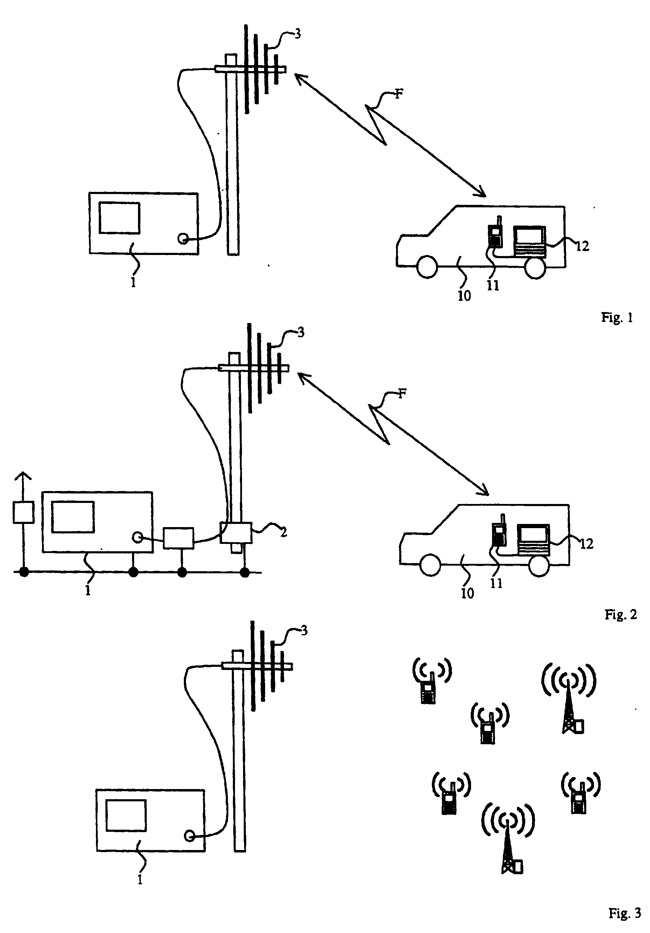

In Fig. 1 ist schematisch ein modifiziertes Mobilfunktestgerät 1 dargestellt, welches sich an einem Ort befindet, dessen Eignung zur Installierung einer Basis- oder Feststation eines Funknetzes ermittelt werden soll. Mobilfunktestgeräte sind an sich bekannt und soll hier nicht weiter beschrieben werden. Die notwendige Modifikation besteht im Erhöhen des Sendepegels und der Eingangsempfindlichkeit, um die Dämpfung des Funkweges bzw. der Funkstrecke auszugleichen. Das Testgerät 1 kann nach Abschluß der Messung einfach an einem anderen Ort plaziert werden

In einem, sich in einem Gebiet um den Ort bewegenden Fahrzeug 10 ist ein Meßmobiltelefon 11 mit Steuerrechner 12 angeordnet. Je nach der aktuellen Position des Mobiltelefons 11 wird ein entsprechender Funkweg F vermessen und die Ergebnisse der Messung im Rechner 12 gespeichert. Zwischen dem Testgerät 1 und dem Mobiltelefon 11 wird eine Funkdatenverbindung (Trafficchannel) aufgebaut. Dadurch kann das Mobiltelefon 11 an seinem Standort neben dem Empfangspegel auch die Empfangsqualität bestimmen. Diese Funkverbindung entspricht daher dem Fall, daß anstelle des Testgeräts 1 eine fest installierte Basisstation an deren Ort vorhanden wäre. Über die Funkdatenverbindung können, anders als bei einer herkömmlichen Sprechverbindung, nun Meßergebnisse von dem eine Basisstation simulierenden Testgerät 1 zum Mobiltelefon 11 übermittelt werden. Auf dem umgekehrten Übertragungsweg kann das Testgerät 1 durch das Mobiltelefon 11 oder den Rechner 12 ferngesteuert werden. Dabei sind die Fernsteuerbefehle nicht auf Basisstationsparameter beschränkt, sondern können auch die Meßverbindung, wie z. B. Kanal- oder Bandwechsel, Hopping-Betrieb...., beeinflussen.

Aus der in Fig. 2 dargestellten Variante der Erfindung entnimmt man, daß das Testgerät 1 mit einer Vielzahl von Hilfseinrichtungen, wie z. B. Umschalter, GPS,..., verbunden ist. In der Zeichnung ist als Hilfseinrichtung lediglich ein Rotor 2 bezeichnet, an welchem die Antenne 3 befestigt ist. Insbesondere können somit bei der Fernsteuerung oder Fernabfrage des Testgeräts 1 durch das Meßmobiltelefon 11 auch die Hilfseinrichtungen bedient, angesteuert und abgefragt werden. Vorzugsweise sind ferner geeignete Sensoren und/oder Aktoren vorgesehen. Somit kann ein Steuersignal von dem Meßmobiltelefon 11 an das Testgerät 1 übertragen werden, welches eine Drehung des Rotors um einen vorbestimmten Betrag in einer vorbestimmten Richtung auslöst, wodurch Sende-bzw. Empfangseigenschaften verändert werden. Die so erhaltenen Ergebnisse können auch zur erneuten Ansteuerung des Testgeräts 1 verwendet werden.

Erfindungsgemäß ist eine weitere Betriebsart (Fig. 3) vorgesehen, welche im wesentlichen passiv ist und eine Überwachung des Funkverkehrs gestattet. Zur Veranschaulichung des Funkverkehrs sind in Fig. 3 eine Vielzahl von Basisstationen und Mobiltelefonen schematisch dargestellt. Auf diese Weise können statistische Verkehrsdaten, wie z. B. Belegung der Trafficchannel, Vermessung von Pegel und Qualität,... ermittelt werden. Diese Daten können insbesondere auch als Grundlage für Zellteilungen für ein zellulares Funknetz verwendet werden. Dabei ist nur das Testgerät 1 mit Antenne 3 im Einsatz (Fig. 3). Das Meßfahrzeug 10 ist für die Datenaufnahme nicht notwendig.

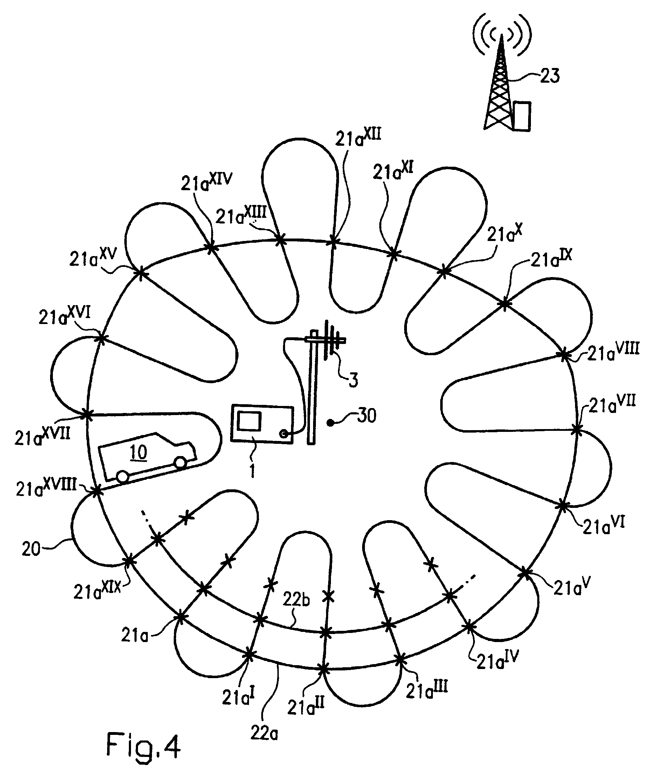

Für eine detailliertere Diskussion der vorliegenden Erfindung wird auf Fig. 4 verwiesen. In Fig. 4 ist eine schematische Darstellung eines möglichen Pfades 20 gegeben, entlang welchem sich ein Meßfahrzeug 10 bewegt, um Ausbreitungsmessungen gemäß der vorliegenden Erfindung durchzuführen. Der Pfad 20 ist lediglich als ein Beispiel gezeigt und in einer realen Testsituation kann das Fahrzeug 10 eine Vielzahl von Pfaden durchlaufen. Wie man erkennt, folgt der Pfad 20 einem meanderförmigen Muster um einen Ort 30, an welchem die Testeinrichtung 1 angeordnet ist. Erfindungsgemäß funktioniert die Testeinrichtung 1 wie ein Basisstationssimulator. Das Gebiet, in welchem sich das Fahrzeug bewegt, könnte z. B. in einer Zelle eines zellularen Funknetzes enthalten oder die Zelle selbst sein. Der Ort 30 ist lediglich einer von einer Vielzahl von Orten, welche als mögliche Stellen zum Errichten einer Basisstation in Betracht gezogen werden. An Meßpunkten x werden Messungen, von z. B. der Feldstärke, durchgeführt. Aus Gründen der Klarheit sind lediglich einige Meßpunkte x gezeigt. Von der vorliegenden Erfindung werden alle Arten von Messungen umfaßt, die dazu dienen können, die optimale Position und den optimalen Aufbau einer Basisstation zu bestimmen oder anderen Zwecken dienen. Wenn man die Punkte 21a, 21aⁱ bis 21a^{xix} nimmt, welche ungefähr dasselbe Meßergebnis besitzen, erhält man eine Kurve 22, die eine Linie derselben Feldstärke anzeigt. Ähnlich können andere Linien von konstanten. Parameterwerten erhalten werden. Lediglich als Beispiel ist ein Teil einer weiteren derartigen Kurve 22b gezeigt. Als Ergebnis der Messungen erhält man insbesondere eine Anzahl von derartigen Kurven, welche sich auf die Feldstärke und/oder andere Parameter beziehen. Sogar wenn die Übertragungskennlinien bzw. -charakteristiken der Antenne 3 isotropisch ist, wäre die Kurve 22a nicht ein Kreis, und zwar aufgrund einer Anzahl von Effekten, z. B. Reflektionen, Interferenzen oder dem Effekt einer weiteren Basisstation 23 in der Nähe. Jedoch, z. B. um herauszufinden, ob sich ein Ort als die beste Position zur Errichtung einer Basisstation qualifiziert, muß nicht nur eine Anzahl von Orten auf diese Art und Weise getestet werden, sondern ebenfalls muß der Sender an diesem Ort in gewissen Beziehungen 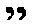 verändert" werden. Somit könnte, z. B. in dem vorliegenden Fall der ausgewählte Ort 30 Mängel im Hinblick auf den Leistungspegel in der oberen rechten Ecke des zu testenden Gebiets aufweisen. Aber, durch Erhöhen der Intensität des Signals in diese Richtung, z. B. durch Verändern der Richtcharakteristik, oder durch Verändern der Sendefrequenz könnte es sich tatsächlich herausstellen, daß dieser Ort optimal ist. Für einen Fachmann ist klar, daß bei dieser Art des Testens eine Optimierung in einem mehrdimensionalen Parameterraum durchgeführt werden muß. Gemäß dem Stand der Technik, bei dem sich ein 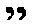 dummer" Dauerstrichsender an der Stelle der Testeinrichtung 1 befindet, muß die Testmannschaft, welche in dem Fahrzeug herumfährt, zu dem Ort 30 zurückkehren, und notwendige Veränderungen und Einstellungen z. B. die Änderung einer Frequenz oder von anderen Strahlungscharakteristiken durchführen. Gemäß der vorliegenden Erfindung können diese Steuer- bzw. Fernsteuerbefehle direkt zu der Testeinrichtung 1 an dem Ort 30 übertragen werden.

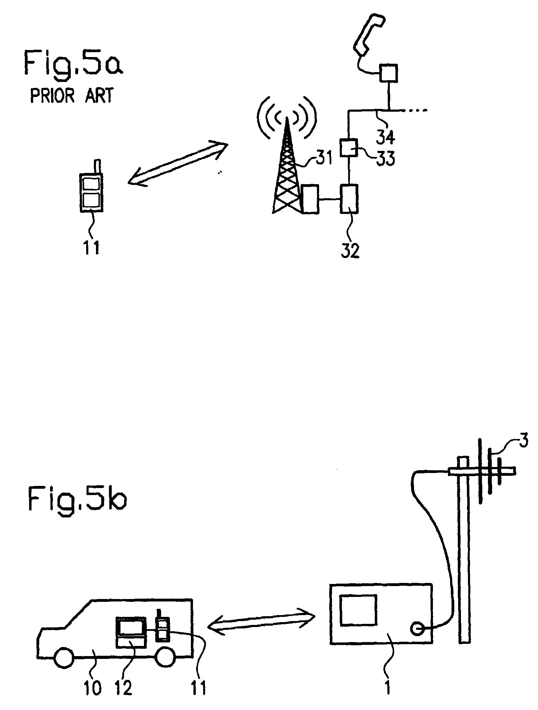

Im folgenden wird nun auf die Fig. 5a (Stand der Technik) eingegangen, welche eine schematische Skizze der Kommunikation eines Mobiltelefons 11 mit einer Basisstation 31 gemäß dem Betrieb eines Funknetzes, wie z. B. dem GSM-Netz zeigt. Die Kommunikation findet gemäß dem in der Technik gut bekannten, sogenannten ISO/OSI (international standards organization/open systems interconnection) -Schichtenmodell statt. Die Kommunikation bzw. Verbindung zwischen dem Mobiltelefon 11 und der Basisstation 31 ist bidirektional. Die Basisstation 31 wird von einer Basisstation-Steuereinrichtung 32 (base station controler = BSC) gesteuert, welche ihrerseits mit einem Mobiltelefonschaltzentrum 33 (mobile switching center = MSC) verbunden ist. Das Mobiltelefonschaltzentrum 33 sieht eine Verbindung zu dem Telefonkabelnetz 34 vor. In der Anwendungsschicht (application layer, Schicht 7), wird insbesondere ein Sprachsignal zwischen dem Mobiltelefon 11 und der Basisstation 31 übertragen. In der Steuerschicht (Schicht 2) und der Netzwerkschicht (Schicht 3) werden Befehle von der Basisstation 31 zu dem Mobiltelefon 11 übertragen. Derartige Befehlssignale können Befehle im Hinblick auf den Ausgangsleistungspegel, des Wechsels eines Kanals, der Hopping-Betriebsart usw. betreffen. Ferner werden in den Schichten 2, 3 Meßergebnisse, die am Mobiltelefon 11 erhalten wurden, und die Information über den Status des Mobiltelefons 11 von dem Mobiltelefon 11 zu der Basisstation 31 übertragen. Demgemäß erlaubt eine derartige Überwachung es dem Systembetreiber, die Leistung des Funksystems zu beobachten und einen Vorfall von verschlechtertem Service zu identifizieren und zwar ohne darauf zu warten, daß Teilnehmer Servicebeschwerden lancieren. Gemäß dem Stand der Technik, wenn das Mobilfunknetz in Betrieb ist, werden Messungen sowohl von dem Mobiltelefon 11 als auch von der Basisstation 31 durchgeführt. Veränderungen oder Einstellungen der Basisstation 31 werden von der Basisstationsteuereinrichtung 32 ausgelöst. Diese Veränderungen oder Einstellungen können ansprechend auch von dem Mobiltelefon 11 gesandte Signale sein.

In Fig. 5b ist die Kommunikation zwischen einem Mobiltelefon 11 und der Testeinrichtung 1 gemäß der vorliegenden Erfindung schematisch dargestellt. Im Gegensatz zu der in Fig. 5a dargestellten und oben diskutierten Situation ist in Fig. 5b noch kein Funknetz installiert oder wird einfach nicht berücksichtigt. Die Testeinrichtung 1 wird vorzugsweise als ein 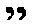 Basisstationsimulator" verwendet, um die besten geographischen Koordinaten der einzurichtenden Basisstation herauszufinden. Gemäß dem Stand der Technik werden Meßergebnisse, welche an dem Ort der und von der Basisstation 31 (Fig. 5a) erhalten wurden, lediglich zu der Basisstationsteuereinrichtung 32 (Fig. 5a) und nicht zu einem Mobiltelefon 11 übertragen. Somit beeinflussen die Meßergebnisse Basisstations-Charakteristiken durch von der fixierten Basisstationsteuereinrichtung ausgelöste Einstellungen. Gemäß der vorliegenden Erfindung werden Meßergebnisse, die an dem Ort des und von dem Basisstationssimulator 1 erhalten wurden, wie z. B. der empfangene Leistungspegel, von dem Basisstationssimulator zu dem Mobiltelefon 11 über den Datenkanal, z. B. über die Anwendungsschicht oder application layer, übertragen. In einem weiteren Ausführungsbeispiel gibt der Basisstationssimulator 1 nach Art eines Spiegels Signale oder Teile davon, die zu diesem von dem Mobiltelefon 11 gesandt wurden, zurück, so daß unter Verwendung des Personalcomputers 12 und von geeigneter Software man Übertragungsqualität von Signalen analysieren kann die von dem Basisstationssimulator gesandt wurden und notwendige Veränderungen für das Mobiltelefon 11, welches eine Meßfähigkeit besitzt, und für Änderungen des Basisstationssimulator 1 zu bestimmen. In letzterem Fall besitzt der Personalcomputer 12, welcher mit dem Mobiltelefon 11 verbunden ist, alle Fähigkeiten um die Radioverbindung zu beeinflussen, und zwar wie die Basisstationsteuereinrichtung 32 der Fig. 5a. Information über notwendige Veränderungen für den Basisstationssimulator 11 kann insbesondere für die Installierung der Basisstation oder des Design von Zellteilungen eines zellularen Mobilfunknetzes verwendet werden. Es sei bemerkt, daß Meßergebnisse, welche an der Basisstation erhalten wurden, zu dem Mobiltelefon über den Datenkanal übertragen bzw. gesandt werden, z. B. über die Anwendungsschicht 7 und nicht niedrigere Schichten, wie im Stand der Technik, wenn man die Verbindung des Netzes im Betrieb betrachtet. Daher findet eine 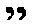 Reflektion" nur im Koordinatenraum statt, wohingegen in dem Schichtenmodell eine Verschiebung auftritt.

Die Erfindung wurde zuvor anhand von bevorzugten Ausführungsformen näher erläutert. Für einen Fachmann ist es jedoch offensichtlich, daß unterschiedliche Abwandlungen und Modifikationen gemacht werden können, ohne von dem der Erfindung zugrundeliegenden Gedanken abzuweichen. Der Kerngedanke der Erfindung liegt insbesondere in der Bereitstellung einer "mobilen bzw. tragbaren Basisstation" und auch in der Ausnutzung der zu vermessenden Verbindung für die Übertragung von Meßergebnissen und/oder zur Fernsteuerung. Ebenfalls ist das Konzept des Bereitstellens einer Uplink-Verbindung oder eines Daten-Rückkanals während Feldversuchen zur Bestimmung einer optimalen Feststation für ein Funknetz von der Erfindung umfaßt.

Zusammenfassend sieht die Erfindung folgendes vor:
1. Verfahren zur Vermessung eines Funkweges (F) mit wenigstens zwei Meßeinrichtungen, welche jeweils über Sende- und Empfangsmittel zum Senden und Empfangen von Signalen aufweisen, dadurch gekennzeichnet, daß über den zu vermessenden Funkweg (F) Meßergebnisse übertragen werden.
2. Verfahren nach Punkt 1, dadurch gekennzeichnet, daß die erste Meßeinrichtung zur Simulation einer Basisstation eines zellularen Funknetzes vorgesehen ist, und die zweite Meßeinrichtung ein Mobiltelefon (11) ist.
3. Verfahren nach Punkt 1 oder 2, dadurch gekennzeichnet, daß die erste Meßeinrichtung eine Testeinrichtung (1) für Mobiltelefone ist.
4. Verfahren nach einem der Punkte 1 bis 3, dadurch gekennzeichnet, daß die Meßergebnisse der ersten Meßeinrichtung über den zu vermessenden Funkweg (F) zur zweiten Meßeinrichtung übertragen werden.
5. Verfahren nach einem der Punkte 1 bis 4, dadurch gekennzeichnet, daß die Meßergebnisse der zweite Meßeinrichtung über den zu vermessenden Funkweg (F) zur ersten Meßeinrichtung übertragen werden.
6. Verfahren nach einem der Punkte 1 bis 5, dadurch gekennzeichnet, daß zwischen den Meßeinrichtungen eine Datenverbindung über den zu vermessenden Funkweg (F) aufgebaut wird.
7. Verfahren nach Punkt 6, dadurch gekennzeichnet, daß über die Datenverbindung digitale Daten zwischen den Meßeinrichtungen ausgetauscht werden.
8. Verfahren nach Punkt 7, dadurch gekennzeichnet, daß die Daten Steuerbefehle aufweisen.
9. Verfahren nach Punkt 7 oder 8, dadurch gekennzeichnet, daß die Daten Meßergebnisse aufweisen.
10. Verfahren nach Punkt 8, dadurch gekennzeichnet, daß die Steuerbefehle Parameter der simulierten Basisstation aufweisen.
11. Verfahren nach Punkt 10, dadurch gekennzeichnet, daß die Parameter der simulierten Basisstation einen Ausgangspegel und/oder einen Frequenzversatz aufweisen.
12. Verfahren nach Punkt 8, dadurch gekennzeichnet, daß die Steuerbefehle Parameter der Funkverbindung aufweisen.
13. Verfahren nach Punkt 12, dadurch gekennzeichnet, daß die Parameter Kanalzuweisung, Zeitschlitz und/oder Hopping-Betriebsart aufweisen.
14. Verfahren nach einem der vorhergehenden Punkte, dadurch gekennzeichnet, daß an die erste Meßeinrichtung Hilfseinrichtungen für das Senden und/oder Empfangen angeschlossen sind.
15. Verfahren nach Punkt 14, dadurch gekennzeichnet, daß die Hilfseinrichtungen von der ersten Meßeinrichtung angesteuert und/oder abgefragt werden.
16. Verfahren nach Punkt 14 oder 15, dadurch gekennzeichnet, daß die Hilfseinrichtungen einen Rotor (2), eine Verstärkereinrichtung und/oder eine Schalteinheit aufweisen.
17. Verfahren nach einem der Punkte 8 bis 16, dadurch gekennzeichnet, daß die Steuerbefehle Parameter der Hilfseinrichtungen aufweisen.
18. Verfahren nach einem der vorhergehenden Punkte, dadurch gekennzeichnet, daß über den Funkweg (F) von der simulierten Basisstation deren Ortskoordinaten an das Mobiltelefon (11) übertragen werden.
19. Verfahren nach Punkt 18, dadurch gekennzeichnet, daß die Ortskoordinaten GPS-Differenzdaten sind.
20. Verfahren nach einem der vorhergehenden Punkte, dadurch gekennzeichnet, daß die erste Meßeinrichtung statistische Daten des Funkverkehrs ermittelt, wobei die erste Meßeinrichtung die statistischen Daten über den Funkweg (F) an das Mobiltelefon (11) überträgt.
21. Verfahren nach Punkt 1, wobei die Meßergebnisse in der Anwendungsschicht übertragen werden.
22. Verfahren nach Punkt 2, wobei Meßergebnisse, welche an der Stelle von und von dem Basisstationssimulator erhalten werden, zu dem Mobiltelefon übertragen werden.
23. Verfahren nach Punkt 2, wobei der Basisstationssimulator von dem Mobiltelefon eingehende Signale zurück an dieses weiterleitet.
24. Verfahren nach Punkt 23, wobei die Signale Meßergebnisse sind, wobei die Meßergebnisse vom dem Mobiltelefon zu dem Basisstationssimulator in der Anwendungsschicht übertragen werden und wobei die Meßergebnisse von dem Basisstationssimulator zu dem Mobiltelefon in anderen Schichten übertragen werden.
25. Verfahren zum Messen eines Funkweges (F), welcher wenigstens zwei Meßeinrichtungen aufweist, wobei jede Meßeinrichtung Sende- und Empfangsmittel zum Senden und Empfangen von Signalen aufweist, und wobei (Fern-)steuersignale über den zu messenden Funkweg (F) übertragen werden.
26. Verfahren nach Punkt 25, wobei die Fernsteuersignale Steuerparameter eines Basisstationssimulators aufweisen, welcher an einem Ort aufgestellt wird, um die Position zum Aufstellen einer Basisstation eines Mobilfunknetzes zu bestimmen.
27. Verfahren zum Bestimmen einer Position für das Aufstellen und/oder der Konstruktion einer Basisstation für ein Mobilfunknetz, wobei das Verfahren folgende Schritte aufweist:
   a) Vorsehen eines Basisstationssimulators;
   b) Vorsehen eines Mobiltelefons;
   c) Aufbauen einer Verbindung zwischen dem Basisstationssimulator und dem Mobiltelefon;
   d) Ausführen von Messungen von Parametern zum Ermitteln der Übertragungsqualität mit dem Mobiltelefon in einem Gebiet um dem Basisstationssimulator;
   e) Auswerten der Meßergebnisse; und
   f) Ausführen von Einstellungen in der Sendecharakteristik des Basisstationssimulators durch Übertragung von Fernsteuersignalen von dem Mobiltelefon zu dem Basisstationssimulator.
28. Verwendung einer Testeinrichtung für Mobiltelefone zur Durchführung einer Vermessung eines Funkweges (F).
29. Vorrichtung zur Vermessung eines Funkweges (F), insbesondere zur Durchführung eines Verfahrens nach einem der vorhergehenden Punkte, dadurch gekennzeichnet, daß über den zu vermessenden Funkweg (F) Meßergebnisse und/oder Steuerbefehle übertragen werden.

## Patentansprüche

1. Verfahren zur Vermessung eines Funkweges (F) mit wenigstens zwei Meßeinrichtungen, welche jeweils über Sende- und Empfangsmittel zum Senden und Empfangen von Signalen aufweisen, **dadurch gekennzeichnet**, daß über den zu vermessenden Funkweg (F) Meßergebnisse und/oder (Fern-)Steuerbefehle oder -signale übertragen werden.

2. Verfahren nach Anspruch 1, **dadurch gekennzeichnet**, daß die erste Meßeinrichtung zur Simulation einer Basisstation eines zellularen Funknetzes vorgesehen ist, wobei vorzugsweise die erste Meßeinrichtung eine Testeinrichtung (1) für Mobiltelefone ist, und die zweite Meßeinrichtung ein Mobiltelefon (11) ist, wobei vorzugsweise die Meßergebnisse der ersten Meßeinrichtung über den zu vermessenden Funkweg (F) zur zweiten Meßeinrichtung übertragen werden, und/oder wobei die Meßergebnisse der zweiten Meßeinrichtung über den zu vermessenden Funkweg (F) zur ersten Meßeinrichtung übertragen werden, und wobei vorzugsweise die Meßergebnisse in der Anwendungsschicht übertragen werden, und wobei vorzugsweise Meßergebnisse, welche an der Stelle von und von dem Basisstationssimulator erhalten werden, zu dem Mobiltelefon übertragen werden.

3. Verfahren nach Anspruch 1 oder 2, **dadurch gekennzeichnet**, daß zwischen den Meßeinrichtungen eine Datenverbindung über den zu vermessenden Funkweg (F) aufgebaut wird, wobei vorzugsweise über die Datenverbindung digitale Daten zwischen den Meßeinrichtungen ausgetauscht werden, und wobei vorzugsweise die Daten Steuerbefehle und/oder Meßergebnisse aufweisen, wobei vorzugsweise die Steuerbefehle Parameter der simulierten Basisstation aufweisen.

4. Verfahren nach einem der vorhergehenden Ansprüche, **dadurch gekennzeichnet**, daß die Parameter der simulierten Basisstation einen Ausgangspegel und/oder einen Frequenzversatz aufweisen, und/oder daß die Steuerbefehle Parameter der Funkverbindung aufweisen, wobei die Parameter der Funkverbindung vorzugsweise die Parameter Kanalzuweisung, Zeitschlitz und/oder Hopping-Betriebsart aufweisen, wobei vorzugsweise an die erste Meßeinrichtung Hilfseinrichtungen für das Senden und/oder Empfangen angeschlossen sind, wobei vorzugsweise die Hilfseinrichtungen von der ersten Meßeinrichtung angesteuert und/oder abgefragt werden, wobei vorzugsweise die Hilfseinrichtungen einen Rotor (2), eine Verstärkereinrichtung und/oder eine Schalteinheit aufweisen, und wobei vorzugsweise die Steuerbefehle Parameter der Hilfseinrichtungen aufweisen.

5. Verfahren nach einem der vorhergehenden Ansprüche, **dadurch gekennzeichnet**, daß der Basisstationssimulator von dem Mobiltelefon eingehende Signale zurück an dieses weiterleitet, wobei vorzugsweise die Signale Meßergebnisse sind, wobei die Meßergebnisse vom dem Mobiltelefon zu dem Basisstationssimulator in der Anwendungsschicht übertragen werden und wobei die Meßergebnisse von dem Basisstationssimulator zu dem Mobiltelefon in anderen Schichten übertragen werden.

6. Verfahren nach einem der vorhergehenden Ansprüche, insbesondere Anspruch 1, **dadurch gekennzeichnet**, daß die Fernsteuersignale Steuerparameter eines Basisstationssimulators aufweisen, welcher an einem Ort aufgestellt wird, um die Position zum Aufstellen einer Basisstation eines Mobilfunknetzes zu bestimmen, wobei vorzugsweise über den Funkweg (F) von der simulierten Basisstation deren Ortskoordinaten an das Mobiltelefon (11) übertragen werden, und wobei vorzugsweise die Ortskoordinaten GPS-Differenzdaten sind.

7. Verfahren zum Bestimmen einer Position für das Aufstellen und/oder der Konstruktion einer Basisstation für ein Mobilfunknetz, insbesondere nach einem der vorhergehenden Ansprüche, wobei das Verfahren folgende Schritte aufweist:
a) Vorsehen eines Basisstationssimulators;
b) Vorsehen eines Mobiltelefons;
c) Aufbauen einer Verbindung zwischen dem Basisstationssimulator und dem Mobiltelefon;
d) Ausführen von Messungen von Parametern zum Ermitteln der Übertragungsqualität mit dem Mobiltelefon in einem Gebiet um dem Basisstationssimulator;
e) Auswerten der Meßergebnisse; und
f) Ausführen von Einstellungen in der Sendecharakteristik des Basisstationssimulators durch Übertragung von Fernsteuersignalen von dem Mobiltelefon zu dem Basisstationssimulator.

8. Verfahren nach einem der vorhergehenden Ansprüche, **dadurch gekennzeichnet**, daß die erste Meßeinrichtung statistische Daten des Funkverkehrs ermittelt, wobei die erste Meßeinrichtung die statistischen Daten über den Funkweg (F) an das Mobiltelefon (11) überträgt.

9. Verwendung einer Testeinrichtung für Mobiltelefone zur Durchführung einer Vermessung eines Funkweges (F).

10. Vorrichtung zur Vermessung eines Funkweges (F), insbesondere zur Durchführung eines Verfahrens nach einem der vorhergehenden Ansprüche, **dadurch gekennzeichnet**, daß über den zu vermessenden Funkweg (F) Meßergebnisse und/oder Steuerbefehle übertragen werden.
